# DEMANDE DE BREVET EUROPEEN

(11) **EP 0 532 417 A1**
(43) Date de publication de la demande: **17.03.1993**
(21) Numéro de dépôt: 92402479.7
(22) Date de dépôt: 10.09.1992
(51) Int. Cl.: B60S 1/34

(54) **Dispositif de lave-glace pour essuie-glace, notamment de véhicule automobile**

(30) Priorité: 12.09.1991 FR 9111270
(71) Demandeur: VALEO SYSTEMES D'ESSUYAGE, 78180 Montigny-Le-Bretonneux (FR)
(72) Inventeur: Schon, Wilfrid, F-63580 St. Etienne/Usson (FR); Peyret, Xavier, F-63000 Clermont-Ferrand (FR)
(74) Mandataire: Gamonal, Didier

(57) **Abrégé**

Un dispositif de lave-glace pour un essuie-glace comporte un bras d'essuie-glace (1), un balai d'essuie-glace (2) apte à frotter sur une surface vitrée (17), une buse de projection de liquide de lave-glace (18) et un tuyau souple (19).

Selon l'invention, le tuyau souple (19) est porté par un support (20) fixé sur la face (9) du bras d'essuie-glace (1) en regard de la surface vitrée (17).

## Description

La présente invention se rapporte à un dispositif de lave-glace pour essuie-glace, notamment de véhicule automobile.

Habituellement, un essuie-glace se compose de deux éléments principaux, tels qu'un bras d'essuie-glace portant un balai d'essuie-glace apte à frotter sur une surface vitrée, comme un pare-brise de véhicule automobile et le dispositif de lave-glace comporte une buse de projection de liquide de lave-glace vers la surface vitrée, cette buse de projection étant portée soit par le bras soit par le balai en étant alimentée en liquide par un tuyau souple, qui permet de raccorder ladite buse à un circuit de lave-glace, constitué d'une pompe de lave-glace et d'un bocal de lave-glace.

Généralement, ce tuyau court le long d'au moins un des éléments de l'essuie-glace en étant disposé latéralement par rapport à celui-ci et en y étant fixé au moyen de cavaliers en forme de C qui viennent enserrer conjointement ledit canal et ledit élément.

Il a été constaté que cette disposition présentait quelques inconvénients non négligeables.

En effet, le montage de ce tuyau n'est pas aisé, car de par la souplesse de celui-ci il est nécessaire de le positionner et de le maintenir provisoirement sur le ou les éléments qui le portent pour ensuite venir le fixer par les cavaliers, ce qui ne peut que compliquer le montage et augmenter le coût de revient de ce dispositif.

En outre, il est nécessaire de prévoir des cavaliers de type spécifique pour chaque élément, et ces cavaliers, après montage, nuisent à l'esthétique de l'ensemble de l'essuie-glace.

De plus, les cavaliers de fixation peuvent être soumis aux intempéries et aux agressions extérieures, telles qu'un choc par exemple, ce qui peut entraîner leur détérioration et de ce fait une mauvaise fixation du tuyau.

De même, en fonctionnement, le tuyau est soumis à des vibrations et, lorsque que celui-ci est en contact avec le bras et/ou le balai, il s'érode en pouvant créer à terme une crevaison du tuyau et un manque d'alimentation en liquide de la buse.

La présente invention se propose de remédier aux inconvénients mentionnés ci-dessus, en présentant un dispositif de lave-glace de conception et de montage très simples et dans lequel le tuyau souple est protégé efficacement de toutes agressions extérieures et en permettant de présenter un essuie-glace très esthétique.

Selon la présente invention, un dispositif de lave-glace pour essuie-glace, notamment de véhicule automobile, dans lequel l'essuie-glace est constitué de deux éléments, tels qu'un bras d'essuie-glace et un balai d'essuie-glace, ledit balai étant apte à frotter sur une surface vitrée et le dispositif de lave-glace est constitué au moins d'une buse de projection de liquide et d'un tuyau souple, porté par un support fixé sur au moins l'un des éléments de l'essuie-glace, caractérisé en ce que le support est une gaine portée par un fourreau entourant l'un des éléments de l'essuie-glace.

Selon une autre caractéristique, le fourreau comporte une zone de verrouillage.

Selon une autre caractéristique, le fourreau porte deux portions tubulaires formant la gaine.

Les autres caractéristiques et avantages de l'invention vont ressortir maintenant de la description qui va suivre, faite à titre d'exemple, et en se référant aux dessins annexés sur lesquels :
- la figure 1 est une vue latérale d'un dispositif de lave-glace pour essuie-glace selon la présente invention ;
- la figure 2 est une vue selon la flèche A de la figure 1 ;
- la figure 3 est une vue partielle en coupe montrant un détail de réalisation selon la ligne BB de la figure 1 ;
- la figure 4 est une vue partielle en coupe montrant une variante de la figure 3 ;
- la figure 5 est une vue partielle en coupe montrant une autre variante de la figure 3 ;
- la figure 6 est une vue partielle en coupe montrant une dernière variante de la figure 3.

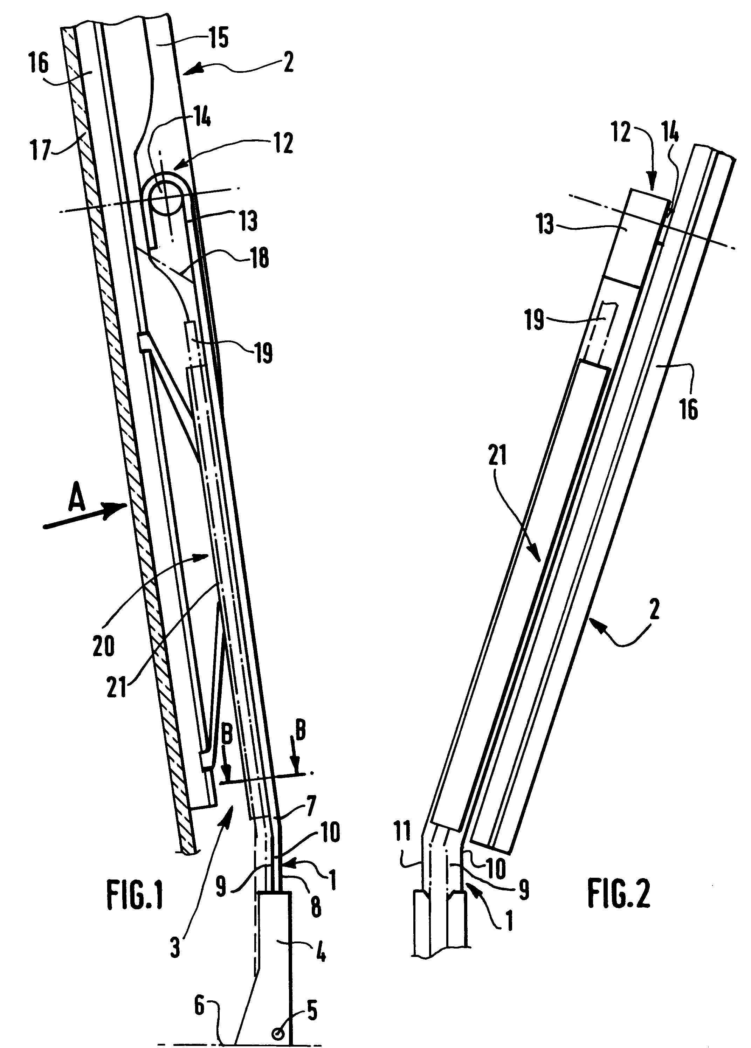

On se réfère maintenant aux figures 1 et 2 sur lesquelles il peut être vu un essuie-glace constitué d'un bras d'essuie-glace 1 portant un balai d'essuie-glace 2 et un dispositif de lave-glace 3.

Le bras d'essuie-glace est constitué, d'une manière connue en soi, par un carter 4 relié par un axe d'articulation 5 à une tête d'entraînement (non représentée) reliée à un axe de pivotement 6 (représenté sur la figure 1 par un trait d'axe), ledit axe de pivotement générant un mouvement de rotation alternatif audit bras.

A l'extrémité du carter opposée à cet axe de pivotement, le carter 4 se poursuit par une tige d'essuie-glace 7 présentant, en section transversale, une forme rectangulaire à deux grandes faces planes 8, 9 sensiblement parallèles l'une à l'autre, ces faces planes venant aboutir sur deux côtés orthogonaux 10, 11 sensiblement parallèles entre eux.

Comme visible sur la figure 1, l'extrémité libre de la tige 7 présente un moyen d'accrochage 12 avec le balai d'essuie-glace 2, ce moyen d'accrochage consiste ici en une extrémité 13 recourbée en U venant enserrer un axe 14 que porte le balai d'essuie-glace 2.

Cet axe 14 est porté par une monture 15 apte à supporter une lame d'essuie-glace 16 qui est prévue pour frotter sur une surface vitrée 17 telle qu'un pare-brise de véhicule automobile ou une lunette arrière de véhicule.

A titre d'exemple, sur les figures 1 et 2, le bras d'essuie-glace 1 est représenté comme étant disposé parallèlement et à côté du balai d'essuie-glace 2 mais il peut être envisagé que le balai et le bras soient situés dans un même plan, tel que le bras se retrouve au moins en partie au-dessus du balai en prévoyant des moyens d'accrochage en conséquence dudit bras avec ledit balai.

Comme visible sur les figures 1 et 2, le dispositif de lave-glace 3 est constitué d'une buse de projection de liquide de lave-glace 18, symbolisée sur la figure 1 par un trait d'axe et qui est portée soit par le bras d'essuie-glace 1, soit par le balai d'essuie-glace 2. Cette buse de projection est raccordée par un conduit souple 19 à un circuit de lave-glace constitué habituellement d'une pompe et d'un bocal de lave-glace.

Dans la suite de la description il sera fait mention du fait que le tuyau 19 est porté uniquement par le bras mais il peut être envisagé, et cela sans sortir du cadre de l'invention, que le tuyau 19 soit porté par le balai 2 et plus particulièrement par l'une des faces latérales de la monture que présente ce balai ou que ce tuyau soit porté conjointement par le bras 1 et le balai 2.

Comme visible sur ces figures, le tuyau souple 19 est porté par un support 20 de manière à ce que ce tuyau souple se trouve disposé entre la surface vitrée 17 et le bras d'essuie-glace 1.

Plus précisément, le support 20 est porté par la face 9 du bras d'essuie-glace 1 en regard de la surface vitrée 17.

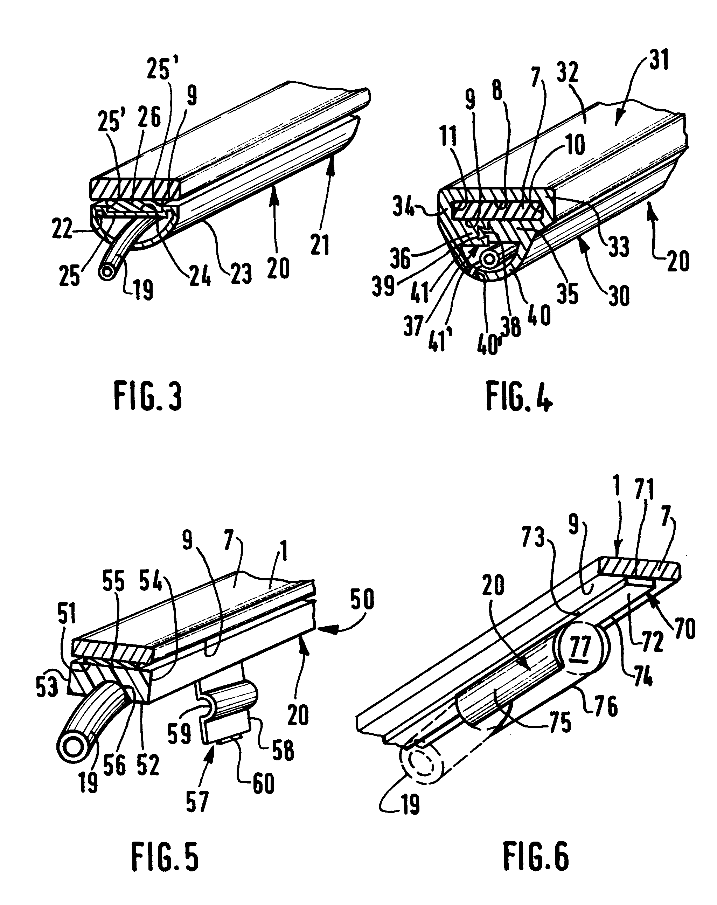

Plus précisément et en se reportant en plus à la figure 3, le tuyau souple 19 est porté par un support en forme de gaine 21 en étant logé à l'intérieur de celle-ci, cette gaine étant par la suite fixée sur le bras 1.

Commme visible sur la figure 3, la gaine 21 présente, en section, une forme sensiblement semi-tubulaire se composant d'une base plane 22 et d'une paroi cylindrique 23 venant rejoindre cette base en étant disposée en vis-à-vis de la surface vitrée 17.

En pratique, la base plane 22 présente un enfoncement en direction de la partie creuse de la gaine 21 de manière à créer un logement 24 à fond plat 25 et à rebords sensiblement perpendiculaires 25′, ce logement s'étendant tout ou en partie le long de la base 22 pour des moyens adhésifs 26.

Les moyens adhésifs peuvent être constitués d'un ruban adhésif double face, comme représenté sur la figure 3, le ruban adhésif adhérant d'une part, sur la face plane 9 du bras d'essuie-glace et d'autre part, sur le fond plat horizontal 25 du logement 24.

Tout autre moyen adhésif peut être utilisé, tel que notamment une colle sous forme de mastic à deux composants, ou une colle sous forme de film.

Bien entendu, tout autre moyen de fixation de cette gaine sur le bras peut être envisagé tel qu'un moyen par vissage ou clipage.

La gaine 21 peut être en matériau souple de manière à ce qu'elle s'étende sur la majeure partie de la longueur de la tige 7 en épousant la configuration qu'elle présente.

De même cette gaine peut être en polymère extrudé et conformé identiquement aux différentes directions longitudinales de la tige 7.

De cette manière, le tuyau souple 19 est logé en grande partie dans la gaine 21 est protégé de toutes agressions extérieures et, de plus, grâce au support de ce tuyau fixé en regard de la surface vitrée, le montage est grandement facilité puisqu'il suffit d'introduire, par glissement, le tuyau 19 à l'intérieur de la gaine 21.

On se réfère maintenant à la figure 4 qui montre une première variante de réalisation de l'invention.

Dans cette variante, le support 20 est constitué par une gaine 30 portée par un fourreau 31 entourant le bras d'essuie-glace 1.

Le fourreau 31 présente une paroi 32 s'étendant tout au long de la face 8 du bras d'essuie-glace 1, la paroi 32 se poursuivant orthogonalement par des parois latérales 33, 34 venant porter sur les côtés 10, 11 du bras d'essuie-glace, la paroi 32 et les parois 33, 34 venant chevaucher le bras d'essuie-glace.

Les parois latérales 33, 34 se prolongent de manière orthogonale par des parois de fond 35, 36 sensiblement parallèles à la paroi plane 32 en venant se rejoindre dans une zone de verrouillage 37.

Préférentiellement, les parois de fond 35, 36 ont une dimension transversale qui est sensiblement égale à la moitié de la dimension transversale de la paroi plane 32 en portant sur la face 9 du bras.

La zone de verrouillage 37 des deux parois 35, 36 consiste en un clipage d'une protubérance 38 portée par l'extrémité de l'une des parois, ici la paroi 35, dans un évidement 39 complémentaire porté par l'extrémité de l'autre 36 des parois de fond.

Comme visible sur la figure 4, chaque paroi de fond 35, 36 se poursuit au niveau de leur intersection avec les parois latérales respectives 33,34, par des portions de parois cylindriques 40, 41, présentant un bord libre 40′, 41′.

Ces portions cylindriques sont distinctes l'une de l'autre et viennent se rejoindre par leurs bords 40′, 41′, dans une zone de jonction 42 de manière à ce que les parois de fond 35, 36, et les parois cylindriques forment la gaine semi-tubulaire 30.

C'est à l'intérieur de cette gaine que sera disposé le tuyau souple 19, et dans le cas de cette variante, cette gaine est fixée sur le bras d'essuie-glace par le fourreau 31.

Pour le montage de ce support 20, il suffit d'écarter les bords 40′, 41′ de la gaine 30, en faisant quitter la protubérance 38 de l'évidement 39 de façon à ce que les parois latérales 33, 34, et les parois de fond 35, 36 s'écartent les unes des autres de manière à ce que le fourreau 31 puisse être enfilé le long de la tige 7 puis de faire pénétrer la protubérance 38 dans l'évidement 39 pour assurer le verrouillage du fourreau 31 autour de la tige 7 et sa fixation sur celui-ci et après ce verrouillage les bords 40′, 41′ des portions cylindriques 40, 41 se trouvent en contact l'une avec l'autre.

Bien entendu, la protubérance 38 peut s'étendre en totalité ou en partie le long du bord libre de la paroi 35 et le bord libre de la paroi 36 portera un évidement 39 s'étendant en correspondance avec la protubérance 38.

On se reporte maintenant à la figure 5 qui montre une autre variante de réalisation de l'invention dans laquelle le tuyau souple 19 est porté par un support 20 formé par une semelle 50 fixée sur la face 9 du bras d'essuie-glace 1.

La semelle 50 présente en section une forme rectangulaire à grands côtés parallèles 51, 52 aboutissant sur des petits côtés 53, 54 parallèles entre eux et orthogonaux aux grands côtés 51, 52.

La semelle 50 est fixée au bras 1 par l'intermédiaire de moyens adhésifs 55 qui sont disposés entre la face 9 du bras 1 et le grand côté 51 de la semelle 50.

Bien entendu, tout autre moyen de fixation peut être prévu tel qu'un moyen par vissage ou soudage.

Comme visible sur la figure 5, le grand côté 52 de la semelle 50, celui en regard de la surface vitrée, présente une empreinte 56 apte à recevoir le tuyau 19. Cette empreinte présente, en section, une forme correspondant sensiblement à la demi-section du tuyau 19.

En outre, la semelle 50 porte des moyens de verrouillage 57 du tuyau 19 sur la semelle 50 et plus précisément de ce tuyau dans l'empreinte 56.

A titre d'exemple, ces moyens de verrouillage consistent en au moins une patte 58 articulée sur la zone de jonction d'un petit côté 53 ou 54 avec le grand côté 52 de la semelle.

Ici, il est prévu plusieurs pattes 58 qui présentent un enfoncement 59 de section semi-tubulaire correspondant sensiblement à la demi-section du tuyau 19.

Ainsi, pour immobiliser sur la semelle 50 le tuyau 19, il suffit, après avoir placé ledit tuyau dans l'empreinte 56, de faire correspondre avec le tuyau 19 les enfoncements 59 par basculement des pattes 58 autour de leur axe. Ces pattes sont ensuite verrouillées par l'intermédiaire de moyens de fixation 60, tels que des clipages de l'extrémité libre des pattes 58 sur des évidements prévus dans la semelle 50.

Sur la variante de la figure 6, la face 9 du bras d'essuie-glace 1 porte une semelle 70 qui a, en section, une forme rectangulaire à grands côtés 71, 72 parallèles entre eux et à petits côtés 73, 74 sensiblement parallèle entre eux en étant orthogonaux aux grands côtés 71, 72.

Au niveau des zones de jonction entre les petits côtés 73, 74 et le grand côté 72, sont prévues deux languettes élastiques 75, 76 présentant une forme sensiblement incurvée vers l'extérieur de manière à ce que, en section, elles forment entre elles un logement 77 sensiblement tubulaire qui présente un diamètre légèrement inférieur au diamètre du tuyau 19.

C'est entre ces deux languettes 75, 76 que sera introduit, par clipage, le tuyau souple 19 de manière à ce que ces languettes viennent enserrer ledit tuyau.

Comme précédemment mentionné, la semelle 70 peut être fixée sur le bras d'essuie-glace par tout moyen connu, tel que par des moyens adhésifs, par soudage ou par vissage.

La présente invention n'est pas limitée aux exemples de réalisation décrits jusqu'à maintenant mais englobe toutes variantes.

Notamment, dans l'exemple des figures 1 à 4, la gaine peut avoir un profil différent tel qu'un profil sensiblement triangulaire creux de manière à créer des faces du triangle qui génèrent une surface déflectrice de l'air venant heurter le bras d'essuie-glace.

## Revendications

**1)** Dispositif de lave-glace pour essuie-glace, notamment de véhicule automobile, dans lequel l'essuie-glace est constitué de deux éléments, tels qu'un bras d'essuie-glace (1) et un balai d'essuie-glace (2), ledit balai étant apte à frotter sur une surface vitrée (17) et le dispositif de lave-glace est constitué au moins d'une buse de projection de liquide (18) et d'un tuyau souple (19), porté par un support (20) fixé sur au moins l'un des éléments (1,2) de l'essuie-glace, caractérisé en ce que le support est une gaine (30) portée par un fourreau (31) entourant au moins l'un des éléments (1,2).

**2)** Dispositif de lave-glace pour essuie-glace selon la revendication 1, caractérisé en ce que le fourreau (31) comporte une zone de verrouillage (37).

**3)** Dispositif de lave-glace pour essuie-glace selon la revendication 1, caractérisé en ce que le fourreau (31) porte deux portions tubulaires (40,41) formant la gaine (30).
